# EUROPÄISCHE PATENTSCHRIFT

(11) **EP 1 363 858 B1**
(45) Veröffentlichungstag und Bekanntmachung des Hinweises auf die Patenterteilung: **15.09.2004**
(21) Anmeldenummer: 02715969.8
(22) Anmeldetag: 25.01.2002
(51) Int. Cl.: C02F 5/00, F24H 1/00

(54) **EINRICHTUNG ZUR CHEMISCH/PHYSIKALISCHEN WASSERBEHANDLUNG UND TRINKWASSER**
DEVICE FOR CHEMICALLY/PHYSICALLY TREATING DRINKING WATER
DISPOSITIF DE TRAITEMENT CHIMIQUE/PHYSIQUE D'EAU POTABLE

(30) Priorität: 20.02.2001 AT 2582001; 02.03.2001 AT 3342001
(43) Veröffentlichungstag der Anmeldung: 26.11.2003
(73) Patentinhaber: Watercryst chemiefreie Wasserbehandlung GmbH, 6175 Kematen in Tirol (AT)
(72) Erfinder: LEITER, Klaus, A-6176 Völs (AT); WALDER, Gerhard, A-6170 Zirl (AT); MAIR, Franz, A-6091 Birgitz (AT)
(74) Vertreter: Torggler, Paul Norbert, Dr.
(86) Internationale Anmeldenummer: PCT/AT2002/000032
(87) Internationale Veröffentlichungsnummer: WO 2002/066384

(56) Entgegenhaltungen:
- DE-A- 3 906 715
- GB-A- 1 373 990
- US-A- 2 861 689
- US-A- 4 662 314

## Beschreibung

Die vorliegende Erfindung betrifft einen Warmwasserbereiter - insbesondere Boiler - mit einer Einrichtung zur physikalischen Wasserbehandlung von Trinkwasser zur Verminderung der Kalksteinbildung, wobei die Einrichtung mindestens einen Wassereinlaß und mindestens einen Wasserauslaß aufweist.

In der PCT-Anmeldung WO 99/48822 wird beschrieben, daß ein schwachsaures Ionenaustauscherharz in der Ca-Form an seiner Oberfläche katalytisch Kalkfällung aus einer kalkhaltigen Lösung auslöst. Diesen Vorgang kann man zur physikalischen Wasserbehandlung nutzen: Die an der Oberfläche des katalytisch wirkenden Granulates gebildeten Kalkkristallkeime lösen sich leicht von der Oberfläche ab und sind im übersättigten Wasser selbst Kristallisationszentren. Das Wachstum dieser Kristallisationszentren bindet die überschüssigen Calcium- und Carbonationen an sich und Ausfallprozesse an Rohr- und Boilerwänden werden auf diese Weise nachhaltig unterdrückt. In der PCT-Anmeldung WO 99/48822 finden sich auch technische Beschreibungen, wie vorzugsweise Wasserbehandlungseinrichtungen mit diesem Katalysatormaterial ausgeführt und in der Trinkwasserinstallation eingesetzt werden. Im wesentlichen sind diese Wasserbehandlungsgeräte aufgebaut aus einem druckfesten Behälter, einem Düsenboden und einem granulatzurückhaltenden Filterelement. Ursprünglich war gedacht diese Katalysatortechnologie im Kaltwasserstrang der Trinkwasseranlage einzubauen.

Es wurde in der Folge gefunden, daß man dieses Katalysatorgranulat am effektivsten im Warmwasserbereich in Kombination mit einem Warmwasserspeicher einsetzt, und zwar aus folgenden Gründen:
- Der Grad der Übersättigung des kalkhaltigen Wassers ist im Warmwasserbereich höher; entsprechend nimmt auch die Bildungswahrscheinlichkeit von Kristallkeimen an der Oberfläche des Katalysatorgranulates zu.
- Die Wachstumskinetik der gebildeten Kalkkristallkeime ist bei höheren Temperaturen wesentlich schneller; d.h. gebildete Kalkkristallkeime stehen schneller als Kristallisationszentren zur Verfügung.
- In Trinkwassererwärmungssystemen mit Speicher hat das Brauchwasser eine deutlich längere mittlere Verweildauer im System. Diese Verweildauer erlaubt eine längere Behandlungszeit des Wassers. Damit ist eine effiziente Wasserbehandlung auch mit kleinen, kompakten Katalysatoren möglich.
- Mit Warm- bzw. Heißwasser läßt sich das Katalysatorgranulat ideal desinfizieren; eine Desinfektion ist für den sicheren Betrieb im Trinkwasserbereich aufgrund der großen Oberfläche des Materials aus hygienischer Sicht sinnvoll.

Diese Gründe führten dazu, daß man das Katalysatorgranulat vorzugsweise im Warmwasserbereich einsetzt. Um den Schutz des gesamten Trinkwassererwärmungssystems zu gewährleisten, ist es notwendig das gesamte Warmwasser mit dem Katalysator in Kontakt zu bringen. Diese Forderung wird beispielsweise dadurch erfüllt, daß man das Wasserbehandlungsgerät entweder in eine bestehende Zirkulationsleitung einsetzt und mit einer Zirkulationspumpe das Warmwasser umwälzt oder alternativ eine eigene Bypassleitung über den Warmwasserspeicher baut und in diese Leitung das Wasserbehandlungsgerät mitsamt einer Zirkulationspumpe integriert.

In der österreichischen Patentschrift AT 406 826 B ist in Fig. 2 ein Ausführungsbeispiel für den Einsatz des Katalysatorgranulates in der Warmwasserzirkulation dargestellt. Es wird in dieser Schrift eine Vorrichtung zum Desinfizieren einer Wasserbehandlungseinheit gezeigt, welche als eigenständiges Gerät in den Kaltwasserteil oder Warmwasserteil einer Trinkwasserinstallation eingebaut wird. Durch den Einbau eines solchen Zusatzgerätes entsteht ein zusätzlicher Aufwand und Platzbedarf. Darüber hinaus bedarf dieses Zusatzgerät einer Energieversorgung zum Aufheizen des zu behandelnden Wassers. Hierdurch entsteht ein zusätzlicher Energieverbrauch, welcher durch die auftretenden Wärmeverluste in der Trinkwasserinstallation nicht vollständig rückgewonnen werden kann.

Die technische Lösung mit einer Zirkulationsleitung hat zwei entscheidende Nachteile:
- Man braucht eine Zirkulationsleitung mit einer Zirkulationspumpe und Energie für deren Betrieb
- Es gibt Wärmeverluste durch die Zirkulation

Diese Nachteile stören die ansonsten makellose ökologische und ökonomische Bilanz der Katalysatortechnologie: Das Verfahren selbst, die Bildung der Kristallkeime, braucht keine chemischen Zusatzstoffe - es ist ein "chemiefreies" Verfahren - und keine Energie, da die zur Bildung notwendige Energie in der Übersättigung der kalkhaltigen wässrigen Lösung gespeichert ist. Der nachträgliche Einbau einer Zirkulationsleitung mit einer Zirkulationspumpe erhöht den Investitionsaufwand und der Betrieb der Zirkulation verursacht Betriebskosten. Diese Umstände wirken sich insbesondere bei kleinen Anlagen besonders nachteilig auf die Entscheidung des Kunden für die Technologie aus. Bei Schichtspeichern ist zudem eine Zirkulation über den Speicher problematisch.

Des weiteren ist es bekannt, die wasserbehandelnde Substanz, vorzugsweise das Katalysatorgranulat, in einer technischen flüssigkeitsgefüllten Anlage direkt in den Bereich wo z.B. die Kalkprobleme auftreten zu integrieren. Die technische Anlage selbst wird bestimmungsgemäß nicht alleine zur Aufnahme des wasserbehandelnden Stoffes, vorzugsweise des Katalysatorgranulats, vorgesehen und erfüllt einen anderen technisch notwendigen Zweck. Dies kann z.B. die Bevorratung (Speicherung/Bufferung) einer Flüssigkeit, insbesondere Speichern von Warmwasser (Energiespeicherung) für einen späteren Verbrauch sein. Die beschriebenen technischen Anlagen können auch der Erwärmung von Flüssigkeiten, der Weiterleitung der Flüssigkeit oder der Kombination aus den genannten Funktionen dienen.

Hierbei wird vorausgesetzt, daß der für die Behandlung notwendige Transport der Flüssigkeit zum Katalysatorgranulat und der Transport der für die Wasserbehandlung notwendigen Kristallisationszentren von der Oberfläche des Katalysatorgranulates in den gesamten flüssigkeitsgefüllten Raum in ausreichenden Maße mittels Diffusion und Konvektion erfolgt. Diffusion und Konvektion sind jedoch im allgemeinen sehr langsame Vorgänge und es kann nicht immer eine ausreichende Behandlungsleistung im gesamten flüssigkeitsgefüllten Raum garantiert werden. Auch die spezielle Adaptierung der angeführten Ausführungsbeispiele um in der jeweiligen Anwendung im ausreichenden Maße Diffusion und Konvektion zu ermöglichen, erfordert mitunter einen großen technischen Aufwand, der einen Teil der Einsparungen (kein Druckbehälter, keine Heizung) wieder zunichte macht.

Aufgabe der Erfindung ist es somit, eine Wasserbehandlungseinheit zur Verminderung der Kalksteinbildung so auszubilden und anzuordnen, daß eine gesicherte Verminderung der Kalksteinbildung auf konstruktiv einfache Weise erzielt wird.

Dies wird erfindungsgemäß dadurch erreicht, daß die Einrichtung im Kaltwasserzulauf des Warmwasserbereiters angeordnet ist, und in gut wärmeleitender thermischer Verbindung mit dem Warmwasserbereich des Warmwasserbereiters steht und darüber hinaus ein modifiziertes schwachsaures lonentauschermaterial zur katalytischen Kalkfällung - vorzugsweise in Ca-Form und/oder granulatförmig - als mindestens einen wasserbehandelnden Stoff aufweist.

Es ist somit vorgesehen, daß bei dem erfindungsgemäßen Warmwasserbereiter die Einrichtung einerseits in den Kaltwasserzulauf des Warmwasserbereiters eingebaut ist und andererseits gleichzeitig durch den Warmwasserbereich des Warmwasserbereiters erwärmt wird. Hierdurch steht die Einrichtung zwar in gut wärmeleitender und direkter thermischer Verbindung mit dem Warmwasserbereich des Warmwasserbereiters, wird aber nicht unmittelbar vom Warmwasser aus diesem durchströmt. Dadurch besteht zwar eine thermische aber keine unmittelbare hydraulische Ankopplung. Diese Anordnung hat zum einen den Vorteil, daß eine zentrale Behandlung der gesamten einströmenden Flüssigkeit durch die erfindungsgemäße Einrichtung gewährleistet und damit der gesamte flüssigkeitsgefüllte Raum folglich geschützt ist. Eine weitere positive Eigenschaft ist, daß bei der erfindungsgemäßen Ausführungsform keine zusätzliche Heizung notwendig ist. Hierdurch werden thermische Energieverluste unterbunden sowie die Energie für elektrisches Heizen oder Pumpen eingespart. Darüber hinaus läßt die erfindungsgemäße Einrichtung die Diffusions- und Konvektionsvorgänge im Warmwasserbereiter unbeeinflußt. Durch die Anordnung des schwachsauren lonentauschermaterials in thermischer Verbindung mit dem Warmwasserbereich des Warmwasserbereiters herrscht in der Einrichtung eine optimale Bildungswahrscheinlichkeit für Kristallisationszentren am Katalysatorgranulat, da sich dieses die meiste Zeit im Bereich höherer Temperaturen befindet. Eine günstige Variante sieht dabei vor, daß die Einrichtung Kristallisationskeime in das sie durchströmende Wasser abgibt.

In der Weiterverfolgung dieses Konzeptes ist es besonders günstig, daß in die Einrichtung ausschließlich Kaltwasser aus dem Kaltwasserzulauf des Warmwasserbereiters einströmt. Hierdurch wird wiederum sichergestellt, daß zum einen das gesamte in den Warmwasserbereiter einströmende Wasser die erfindungsgemäße Einrichtung passieren muß und damit in seiner Gesamtheit der erfindungsgemäßen Wasserbehandlung unterzogen wird. Andererseits gewährleistet diese Ausführungsform, daß die Diffusions- und Konvektionsvorgänge im Warmwasserbereiter nicht von der erfindungsgemäßen Einrichtung negativ beeinflußt werden.

Bezüglich der Positionierung der erfindungsgemäßen Einrichtung ist es sowohl vorgesehen, daß die Einrichtung im Inneren als auch alternativ dazu an der Außenwandung des Warmwasserbereiters angeordnet ist. Wenn die Einrichtung an der Außenwandung des Warmwasserbereiters angeordnet ist, ist es besonders günstig, daß sie beim Vorhandensein einer Thermoisolierung des Warmwasserbereiters zwischen der Außenwandung des Warmwasserbereiters und der Thermosisolierung angebracht ist. Bei der Anbringung an der Außenwandung des Warmwasserbereiters muß besonders darauf geachtet werden, daß zwischen der Einrichtung und der Außenwandung des Warmwasserbereiters nur sehr gut wärmeleitende Materialien verwendet werden, damit eine optimale Wärmeübertragung zwischen dem Warmwasserbereich und der erfindungsgemäßen Einrichtung stattfindet.

Sowohl zur optimalen Verminderung der Kalksteinbildung als auch zur Hygienisierung des Katalysatorgranulats mittels thermischer Desinfektion ist es besonders günstig, daß der Warmwasserbereich des Warmwasserbereiters, mit welchem die Einrichtung in gut wärmeleitender thermischer Verbindung steht, eine Mindesttemperatur von 55°C aufweist.

Darüber hinaus ist es besonders günstig, daß der Wasserauslaß der Einrichtung eine Leitung aufweist, welche in den unteren Bereich des Warmwasserbereiters - vorzugsweise in die unmittelbare Nähe der Heizung des Warmwasserbereiters reicht. Alternativ hierzu ist vorgesehen, daß der Wasserauslaß der Einrichtung direkt im unteren Bereich des Warmwasserbereiters - vorzugsweise in der unmittelbaren Nähe der Heizung des Warmwasserbereiters - angeordnet ist. Diese Ausführungsformen gewährleisten, daß das kalte bzw. nur schwach erwärmte Wasser, welches aus dem Kaltwasserzulauf des Warmwasserbereiters über die erfindungsgemäße Einrichtung in den Warmwasserbereiter einströmt, nicht die Konvektions- und die Diffusionsvorgänge im Warmwasserbereiter stört. Bei diesen Ausführungsformen tritt das verhältnismäßig kühle Wasser wie auch sonst üblich im unteren Bereich des Warmwasserbereiters in diesen ein, wird anschließend von der Heizung des Warmwasserbereiters erwärmt und steigt den ungestörten Konvektions- und Diffusionsvorgängen folgend im Warmwasserbereiter auf. Die Konvektion, der Wassertransport und die Temperaturschichtung in dem Warmwasserbereiter wird somit nicht gestört.

Eine weitere Variante sieht vor, daß der wasserbehandelnde Stoff rückspülbar ist. Hierbei ist es besonders günstig, daß die Einrichtung mindestens einen Bypaß aufweist, wobei der Bypaß eine Rückspülung - vorzugsweise des wasserbehandelnden Stoffes - der Einrichtung erlaubt.

Bei der Ausgestaltung der erfindungsgemäßen Einrichtung ist es günstig, daß die Einrichtung mindestens eine Kartusche mit Siebboden und Auslaufdüse aufweist, wobei in der Kartusche der wasserbehandelnde Stoff angeordnet ist. Dies Anordnung gewährleistet zum einen, daß der wasserbehandelnde Stoff optimal von Kaltwasser in der Einrichtung durchströmt werden kann und andererseits jedoch von dem Siebboden und den Auslaufdüsen daran gehindert wird, aus der Einrichtung ausgespült zu werden.

Eine besonders günstige Ausführungsform sieht vor, daß die Einrichtung mindestens eine Innenkartusche - vorzugsweise mit Siebboden und/oder Auslaufdüse - aufweist, wobei in der Innenkartusche der wasserbehandelnde Stoff angeordnet ist und die Einrichtung eine Kartuschenaufnahme aufweist, welche im Kaltwasserzulauf des Warmwasserbereiters angeordnet ist, wobei die Innenkartusche - vorzugsweise auswechselbar - in die Kartuschenaufnahme einbringbar ist. Diese Variante sieht somit vor, daß die Außenkartusche sowie der Wassereinlaß und der Wasserauslaß der Einrichtung zur Wasserbehandlung fest im oder am Warmwasserbereiter installiert sind, während die Innenkartusche, welche vorzugsweise den wasserbehandelnden Stoff beinhaltet zum einen einfach ausgetauscht und erneuert oder zum anderen durch andere Kartuschen mit anderen wasserbehandelnden Vorrichtungen ersetzt werden kann. Das Austauschen bzw. die Erneuerung des eigentlichen wasserbehandelnden Stoffes bzw. der eigentlichen wasserbehandelnden Vorrichtung ist somit bei dieser Ausführungsform besonders einfach und mit wenig technischem Aufwand möglich.

Eine weitere Variante sieht vor, daß die Einrichtung in der oberen Hälfte - vorzugsweise im oberen Drittel - des Warmwasserbereiters angeordnet ist.

Weitere Merkmale und Einzelheiten der vorliegenden Erfindung ergeben sich aus der nachfolgenden. Figurenbeschreibung. Dabei zeigen:

### Weiter auf Seite 7 der ursprünglich eingereichten Beschreibung!

Fig. 1 eine an der Außenwandung eines Warmwasserbereiters angebrachte Ausführungsform der erfindungsgemäßen Einrichtung,
Fig. 2 eine Draufsicht auf eine Ausführungsform der erfindungsgemäßen Einrichtung,
Fig. 3 bis Fig. 7 und Fig. 9 im Warmwasserbereiter angebrachte Ausführungsvarianten und
Fig. 8 eine Kartusche mit Katalysatorgranulat.

In einem typischen Ein- bis Zweifamilienwohnhaus erfolgt die Wasserentnahme stets diskontinuierlich, d.h. die längste Zeit über steht das Wasser, diese Stagnationszeiten kann genützt werden, um das Katalysatorgranulat auf eine Temperatur vorzugsweise über 55°C aufzuheizen. Mit jeder Wasserentnahme wird das mit Kristallisationszentren angereicherte Wasser in den Boiler gespült.

Da für den sicheren Betrieb des Warmwasserspeiches eine Überdruck- und eine Rückflußsicherung vorhanden sein muß, braucht man keine weitere Maßnahmen vorzusehen. Ein geeigneter Bypass, um die Einrichtung regelmäßig rückspülen zu können, ist für den Langzeitbetrieb sinnvoll.

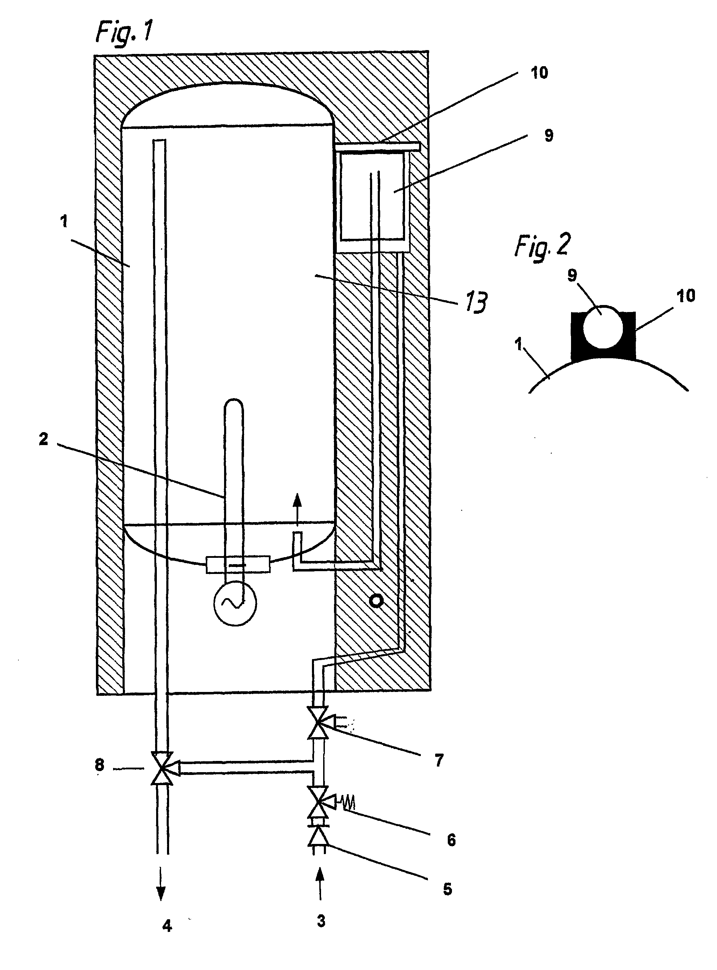

Fig. 1 zeigt als ein Beispiel die Integration einer Wasserbehandlungseinheit in den Kaltwasserzulauf eines wandhängenden Elektroboilers: Der Boiler weist einen Warmwasserbehälter 1 und ein auf einem Heizflansch sich befindendes (elektrisches) Heizelement 2 auf. Das Kaltwasser strömt über die Kaltwasserzufuhrleitung 3 in den Boiler ein. Die Warmwasserentnahme erfolgt über die Warmwasserentnahmeleitung 4. Ein Rückflußverhinderer 5 verhindert das Zurückfließen des Warmwassers in die Kaltwasserinstallation. Das Überdruckventil 6 sichert vor gefährlichen Überdrücken. Die Ventile 7 und 8 ermöglichen das Rückspülen der Wasserbehandlungseinheit. Die Einrichtung zur Wasserbehandlung weist eine druckfeste Kartusche 9 auf.

Bei Fig. 1 erfolgt die Kartuschenheizung über einen Wärmeblock 10. Der Wärmeblock, der beispielsweise aus Aluminium oder Kupfer gearbeitet ist, wird mit einem Wärmeleitkleber im oberen Bereich des Speichers an der metallischen Außenwand des Speichers befestigt.

Fig. 2 zeigt eine schematische Darstellung des Wärmeblocks. Seine Funktion besteht im optimalen Übertragen der Wärmeenergie aus dem Warmwasserbereich 13 durch die Boilerwand auf die Kartusche. Wärmeblock mit Kartusche und die Kaltwasserzuleitung werden idealerweise in die Thermoisolation des Boilers integriert.

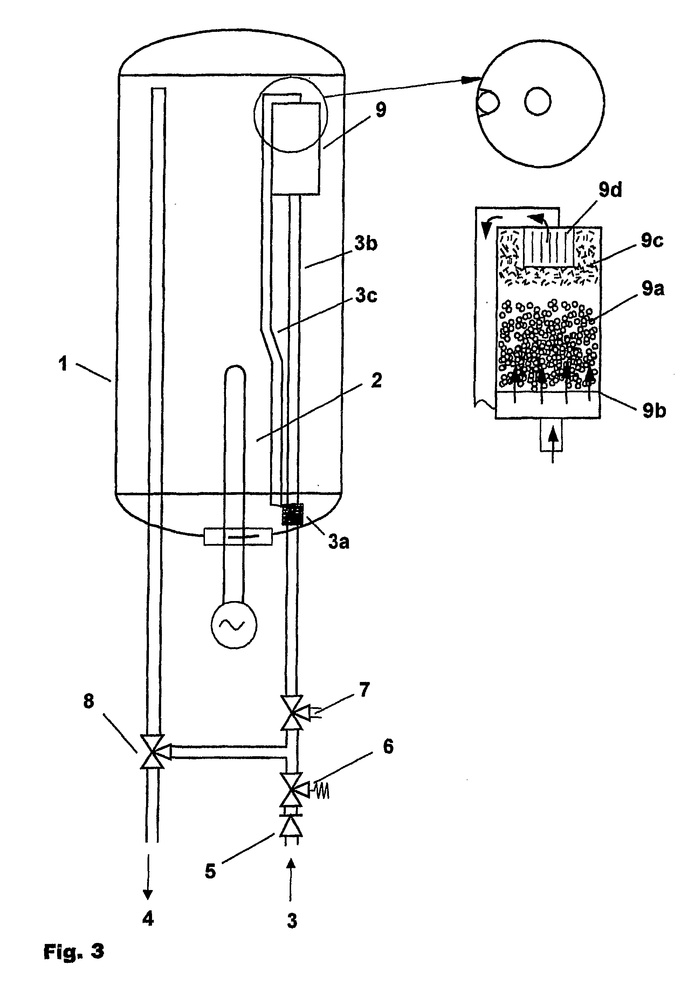

Bei einer zweiten erfindungsgemäßen Ausführung wird der Kaltwasserzulauf in den Warmwasserspeicher hineingeführt und das zulaufende Wasser wird durch einen das Katalysatorgranulat enthaltenden Behälter (oder eine Kartusche), der sich selbst im Speicherinneren befindet, geführt. Der Behälter bzw. die Kartusche befindet sich vorzugsweise in einem Bereich des Speichers, der eine Mindesttemperatur von 55°C aufweist. In diesem Fall ist nicht nur eine optimale Wasserbehandlung, sondern auch die ständige Hygienisierung des Granulates garantiert. Denn, wie oben bereits erwähnt, gilt, daß die Wasserentnahmen aus dem Speicher üblicherweise diskontinuierlich erfolgen. In den Stagnationsphasen erwärmt sich das Granulat auf die Temperatur seiner Umgebung. Bei Temperaturen über 55°C werden Mikroorganismen wirkungsvoll abgetötet und das Katalysatorengranulat bleibt hygienisch einwandfrei. Um eine vorhandene Temperturschichtung im Warmwasserbereiter nicht zu stören, ist es zweckmäßig das behandelte Wasser nicht in dessen Warmwasserbereich 13 zu leiten und dort ausströmen zu lassen. Viel günstiger ist es wie z.B. in Fig. 3 gezeigt, daß das aus der Einrichtung (=Wasserbehandlungseinheit) in den Warmwasserbehälter 1 einströmende Wasser über eine Leitung direkt in den unteren, relativ kalten Bereich des Warmwasserbehälters 1 geleitet wird und erst dort in den Warmwasserbehälter 1 einströmt. Für den klaglosen Dauerbetrieb einer solchen Anordnung ist eine regelmäßige Rückspülung der Kartusche notwendig. Eine entsprechende Ventilanordnung zum Durchführen der Rückspülung ist zweckmäßig.

Der Vorteile dieser Ausführung bestehen darin, daß keine druckfeste Kartusche und keine gesonderte Heizung für den einwandfreien Betrieb notwendig sind.

Fig. 3 zeigt die Ausführung dieses Konzeptes am Beispiel eines wandhängenden Elektrospeichers: Der Boiler besteht aus einem Warmwasserbehälter 1 und einem auf einem Heizflansch sich befindenden elektrischen Heizelement 2. Das Kaltwasser strömt über die Kaltwasserzufuhrleitung 3 in den Boiler ein. Die Warmwasserentnahme erfolgt über die Warmwasserentnahmeleitung 4. Ein Rückflußverhinderer 5 verhindert das Zurückfließen des Warmwassers in die Kaltwasserinstallation. Das Überdruckventil 6 sichert vor gefährlichen Überdrücken. Die Ventile 7 und 8 ermöglichen das Rückspülen der Wasserbehandlungseinheit. Die Wasserbehandlungseinheit besteht aus einem Adapter 3a, einem Rohr 3b, der Katalysatorkartusche 9 und einem Rückströmrohr bzw. - schlauch 3c. Der Adapter 3a ermöglicht das einfache Aufsetzen der Wasserbehandlungseinheit auf die Kaltwasserzuleitung 3.

Will man bestehende Elektrospeicher nachrüsten, dann muß ein besonderes Augenmerk auf die Ausführung dieses Adapters gelegt werden, um eine einfache Montage und ein einfaches Auswechseln der Wasserbehandlungseinheit zu ermöglichen. Die Materialien der Wasserbehandlungseinheit können metallisch sein, besonders vorteilhaft ist aber die Ausführung in wärmebeständigen Kunststoffmaterialien, beispielsweise in Polypropylen. Die Kartusche 9 muß nicht druckfest sein und enthält das Katalysatorgranulat 9a, die Strömungsführung in der Kartusche wird durch den Siebboden 9b, das Inertgranulat 9c und die Auslaufdüse 9d definiert. Auch andere Ausführungen der Kartusche sind möglich.

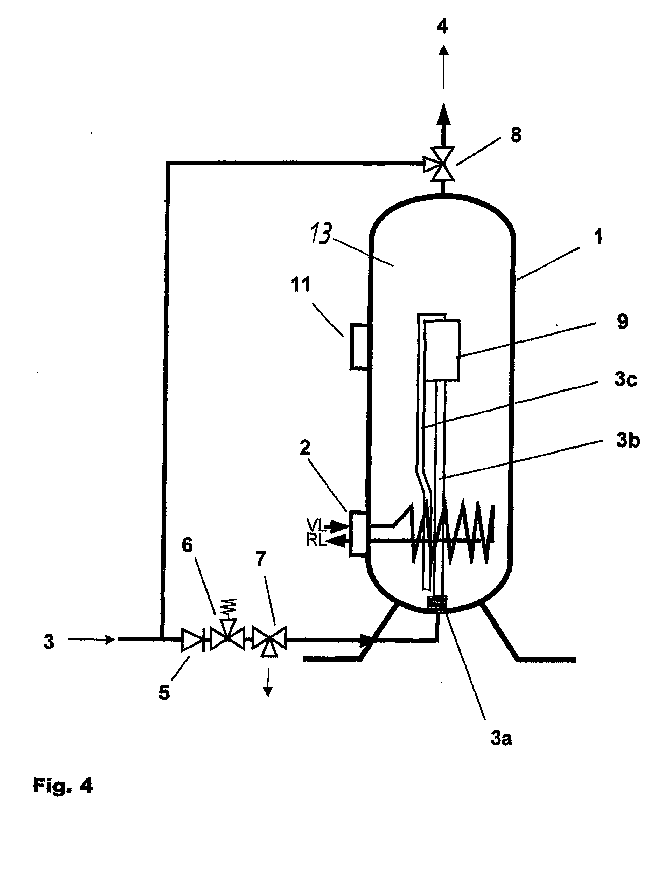

Fig. 4 zeigt eine Ausführung zur Integration der Wasserbehandlungseinheit am Beispiel eines Standboilers. In diesem Fall wird die Kaltwasserzufuhrleitung 3 mit einem Rohr 3b in den Boiler hineinverlängert; dieses Rohr bestehend aus Metall oder Kunststoff ist entweder in eine Muffe eingeschweißt oder eingeschraubt oder über einen geeigneten Adapter 3 a auf den Wassereintritt in den Boiler aufgesetzt. Wie in Fig. 3 dargestellt, ist auf dem Rohr 3b eine Kartusche 9 mit Katalysatorgranulat aufgesetzt. Eine Rohr- bzw. Schlauchverbindung 3c führt das ausströmende, behandelte Wasser in den unteren Bereich des Speichers zurück. Die Konstruktion der Wasserbehandlungseinheit, sollte so sein, daß diese einfach über den Heizflansch 2 wartbar ist; bei vielen Standboilern ist ein 2. Heizflansch 11 vorhanden, der eine noch einfachere Wartung der Kartusche ermöglicht. Die Funktionselemente 1 - 8 wurden bereits in Fig. 1 beschrieben.

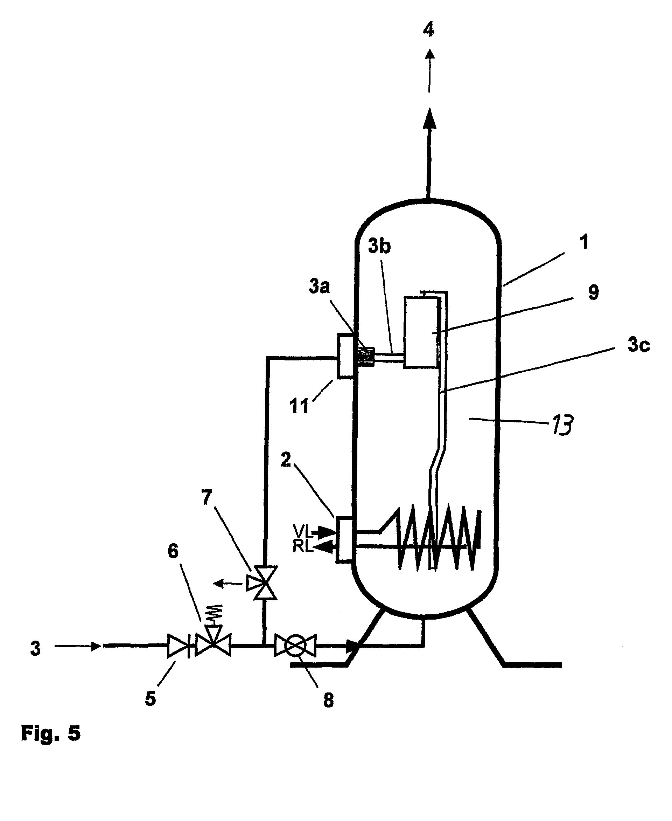

Fig. 5 zeigt eine weitere Variante am Beispiel eines Standboilers. Bei diesem Beispiel wird die Wasserbehandlungseinheit an einem fixen Halteflansch 11 montiert in den Boiler eingebracht. Die Kaltwasserzufuhr 3 erfolgt ebenfalls über diesen Flansch. Die Funktionsweise ist ansonsten wie bezüglich Fig. 1 beschrieben. Bei dieser Variante ist es zweckmäßig, die Wasserbehandlungseinheit konstruktiv so zu gestalten, daß sich die gesamte Wasserbehandlungseinheit über die Flanschöffnung einbauen läßt. Am einfachsten läßt sich dies durch einen 4-teiligen Aufbau realisieren: Die Rohr- bzw. Schlauchverbindung 3c wird zunächst über die Flanschöffnung eingeführt (biegsames Rohr bzw. Schlauch); anschließend wird die Kartusche 9 über die Flanschöffnung in den Boiler gegeben und das Rohr bzw. der Schlauch 3c mit der Kartusche verbunden. Als nächster Schritt wird mit der Kartusche 9 die Rohrleitung 3b verdrehsicher verbunden. Die Rohrleitung 3b kann etwas aus der Flanschöffnung herausgezogen werden, sodaß man diese einfach auf den am Halteflansch angebrachten Adapter 3a (verdrehsicher) aufstecken kann. Abschließend wird der Halteflansch mit dem Boiler verschraubt und die Kaltwasserzufuhr hergestellt.

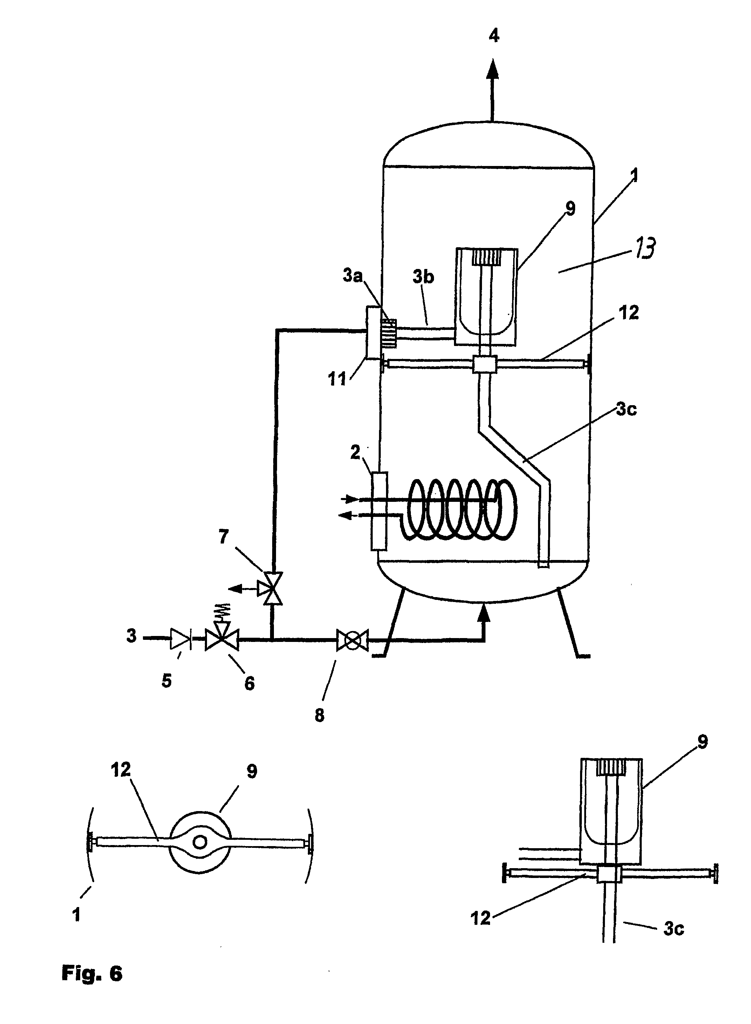

Fig. 6 zeigt die Variante ähnlich Fig. 5, wobei die Montage der Wasserbehandlungseinheit durch eine Führungsschiene 12, die im Speicher verspreizt werden kann, besonders erleichtert wird. Nachdem die Führungsschiene 12 verspreizt ist, wird das Rücklaufrohr 3c eingesetzt und die Kartusche 9 aufgesetzt. Nachdem Befestigen des Zulaufrohres 3b an der Kartusche 9 wird der Halteflansch 11 aufgesetzt, welcher über den Adapter 3a mit Zulaufrohr verbunden wird. Ansonsten erfolgt der Anschluß und Betrieb wie in Fig. 5 beschrieben.

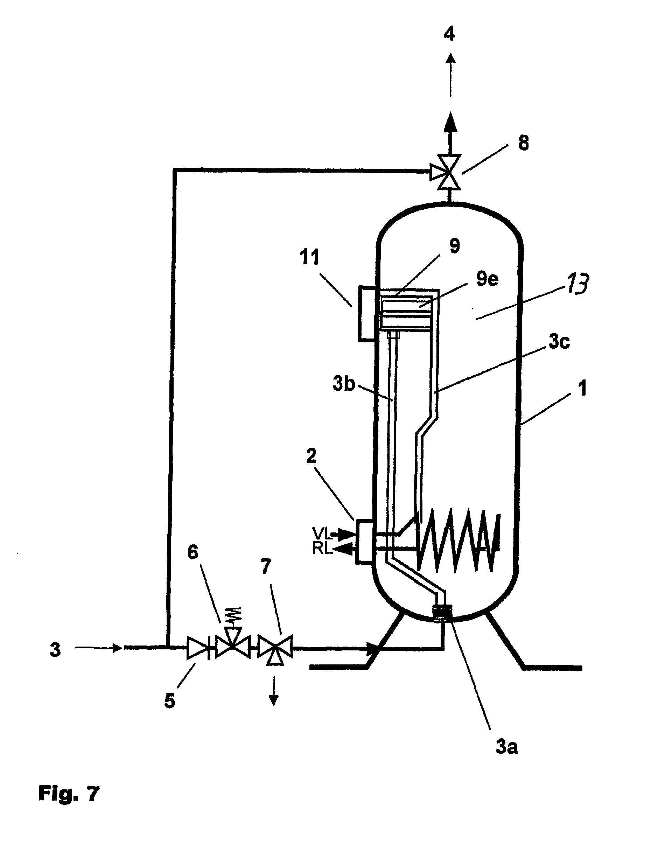

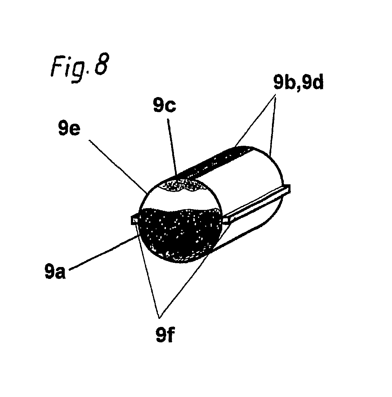

Fig. 7 zeigt eine weitere Variante, wobei angenommen wird, daß die Kaltwasserzufuhrleitung 3b und die Rückströmleitung 3c fix verrohrt zusammen mit einer Kartuschenaufnahme 9 im Speicher montiert ist. Eine Innenkartusche 9e mit dem Katalysatorgranulat 9a und dem Inertgranulat 9c (siehe Fig. 8) wird direkt über einen Halteflansch 11 ein- und ausgebaut. Der Siebboden 9b und die Auslaufdüse 9d sind als feine Schlitze in der Hülle der Innenkartusche ausgeführt, zwei Dichtlippen 9f trennen Zulauf- und Ablaufseite.

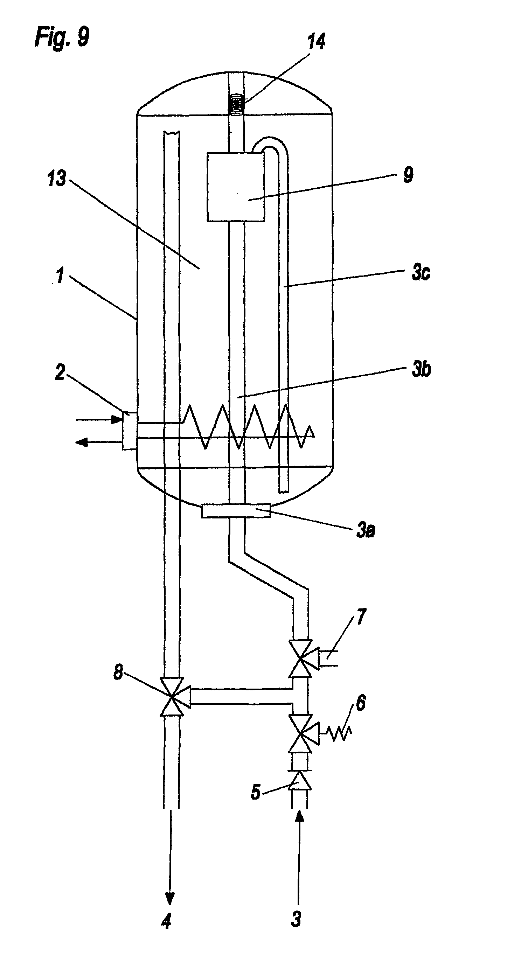

In der in Fig. 9 gezeigten Variante wird die Kartusche 9 mittels des Rohres 3b und des in Längsrichtungelastischen Rohres 14 einfach im Warmwasserbereiter 1 verspreizt. Hierbei sind die Rohrleitungen 3b und 14 vorzugsweise aus lebensmittelechtem Kunststoff gefertigt. Die Rohrleitung 3b funktioniert hierbei als Kaltwasserzulauf zur Kartusche 9. Mit Hilfe des Adapters 3a wird das Rohr 3b zusammen mit der Kartusche 9 und dem Rohr 14 einfach auf die Kaltwasserzuleitung 3 aufgesetzt. Hierbei ist es günstig, daß der Adapter 3a derart ausgebildet ist, daß er beim Aufsetzen auf die Kaltwasserleitung 3 diese wasserdicht umschließt, so daß keine weiteren Installationsarbeiten nötig sind, um eine dichtende Verbindung zwischen dem Adapter 3a und der Kaltwasserzuleitung 3 zu gewährleisten. In dem in Fig. 9 dargestellten Ausführungsbeispiel sorgt die in Längsrichtung ausgebildete elastische Eigenschaft des Rohres 14 (hier durch eine Feder symbolisch dargestellt) für die Verspreizung der Anordnung, welche aus dem Rohr 14 und dem Rohr 3b, dem Adapter 3a und der Kartusche 9 besteht. Die elastischen Eigenschaften in Längsrichtung des Rohres 14 können hierbei, wie dargestellt, durch eine Feder, aber auch durch eine Verformung eines in Längsrichtung gummielastisch ausgebildeten Rohres 14 herbeigerufen werden. Darüber hinaus ist die Anbringung einer ähnlichen Verspreizeinrichtung im Rohr 3b ebenso denkbar. In diesem Fall kann das Rohr 14 starr ausgebildet sein. Das von der Kaltwasserzuleitung 3 durch das Rohr 3b in die Kartusche eintretende Wasser wird nach dessen Behandlung in der Kartusche 9 über das Rückströmrohr bzw. den Rückströmschlauch 3c wieder in den unteren Bereich des Warmwasserbereiters 1 geleitet. Diese Variante bildet eine besonders einfache Möglichkeit des Einbaus der Kartusche 9.

Insgesamt ist die Erfindung nicht auf die gezeigten Ausführungsbeispiele beschränkt. So kann in einer (hier nicht dargestellten) Variante des in Fig. 7 gezeigten Ausführungsbeispiels der Halteflansch 11 auch direkt oben auf dem Warmwasserbereiter bzw. Boiler angebracht sein. Dies ermöglicht unter anderem eine einfache Wartung und Montage der Innenkartusche von oben.

Bei den dargestellten Ausführungsbeispielen strömt durch den Kaltwasserzulauf Kaltwasser aus dem öffentlichen Leitungsnetz ein. Im Sinne der Erfindung ist aber der Begriff "Kaltwasserzulauf" breiter zu sehen. Es kann hier auch bereits vorgewärmtes Wasser, beispielsweise aus einer Boilervorstufe oder einer Mischeinrichtung zwischen Heiß- und Kaltwasser, in den Boiler bzw. die Einrichtung zur physikalischen Wasserbehandlung einströmen. Aufgrund der gut wärmeleitenden thermischen Verbindung mit dem Warmwasserbereich des Warmwasserbereiters kann dann dieses einströmende Wasser in der Einrichtung zur physikalischen Wasserbehandlung auf eine höhere Temperatur gebracht werden.

## Patentansprüche

1. Warmwasserbereiter - insbesondere Boiler - mit einer Einrichtung zur physikalischen Wasserbehandlung von Trinkwasser zur Verminderung der Kalksteinbildung, wobei die Einrichtung mindestens einen Wassereinlaß und mindestens einen Wasserauslaß aufweist, **dadurch gekennzeichnet, daß** die Einrichtung im Kaltwasserzulauf (3) des Warmwasserbereiters (1) angeordnet ist, und in gut wärmeleitender thermischer Verbindung mit dem Warmwasserbereich (13) des Warmwasserbereiters (1) steht und darüber hinaus ein modifiziertes schwachsaures lonentauschermaterial zur katalytischen Kalkfällung - vorzugsweise in Ca-Form und/oder granulatförmig - als mindestens einen wasserbehandelnden Stoff (9a) aufweist.

2. Warmwasserbereiter nach Anspruch 1, **dadurch gekennzeichnet, daß** in die Einrichtung ausschließlich Wasser aus dem Kaltwasserzulauf (3) des Warmwasserbereiters (1) einströmt.

3. Warmwasserbereiter nach einem der Ansprüche 1 oder 2, **dadurch gekennzeichnet, daß** die Einrichtung im Inneren des Warmwasserbereiters (1) angeordnet ist.

4. Warmwasserbereiter nach einem der Ansprüche 1 bis 3, **dadurch gekennzeichnet, daß** die Einrichtung an der Außenwandung des Warmwasserbereiters (1) - vorzugsweise innerhalb der Thermoisolierung des Warmwasserbereiters (1) - angeordnet ist.

5. Warmwasserbereiter nach einem der Ansprüche 1 bis 4, **dadurch gekennzeichnet, daß** der Warmwasserbereich (13) des Warmwasserbereiters (1), mit welchem die Einrichtung in gut wärmeleitender thermischer Verbindung steht, eine Mindesttemperatur von 55°C aufweist.

6. Warmwasserbereiter nach einem der Ansprüche 1 bis 5, **dadurch gekennzeichnet, daß** der Wasserauslaß (3c) der Einrichtung eine Leitung aufweist, welche in den unteren Bereich des Warmwasserbereiters (1) - vorzugsweise in die unmittelbare Nähe der Heizung (2) des Warmwasserbereiters (1) - reicht.

7. Warmwasserbereiter nach einem der Ansprüche 1 bis 6, **dadurch gekennzeichnet, daß** der Wasserauslaß (3c) der Einrichtung im unteren Bereich des Warmwasserbereiters (1 ) - vorzugsweise in der unmittelbaren Nähe der Heizung (2) des Warmwasserbereiters - angeordnet ist.

8. Warmwasserbereiter nach einem der Ansprüche 1 bis 7, **dadurch gekennzeichnet, daß** die Einrichtung Kristallisationskeime in das sie durchströmende Wasser abgibt.

9. Warmwasserbereiter nach einem Ansprüche 1 bis 8, **dadurch gekennzeichnet, daß** der wasserbehandelnde Stoff (9a) rückspulbar ist.

10. Warmwasserbereiter nach einem der Ansprüche 1 bis 9, **dadurch gekennzeichnet, daß** die Einrichtung zumindest einen Bypaß aufweist, wobei der Bypaß eine Rückspülung - vorzugsweise des wasserbehandelnden Stoffes - der Einrichtung erlaubt.

11. Warmwasserbereiter nach einem der Ansprüche 1 bis 10, **dadurch gekennzeichnet, daß** die Einrichtung zumindest eine Kartusche mit Siebboden (9b) und Auslaufdüsen (9d) aufweist, wobei in der Katusche (9e) der wasserbehandelnde Stoff angeordnet ist.

12. Warmwasserbereiter nach einem der Ansprüche 1 bis 11, **dadurch gekennzeichnet, daß** die Einrichtung mindestens eine Innenkartusche (9e) - vorzugsweise mit Siebboden (9b) und/oder Auslaufdüse (9d) - aufweist, wobei in der Innenkartusche der wasserbehandelnde Stoff (9a, 9c) angeordnet ist und die Einrichtung eine Kartuschenaufnahme (9) aufweist, welche im Kaltwasserzulauf (3) des Warmwasserbereiters (1) angeordnet ist, wobei die Innenkartusche (9e) - vorzugsweise auswechselbar - in die Kartuschenaufnahme (9) einbringbar ist.

13. Warmwasserbereiter nach einem der Ansprüche 1 bis 12, **dadurch gekennzeichnet, daß** die Einrichtung in der oberen Hälfte - vorzugsweise im oberen Drittel - des Warmwasserbereiters 1 - angeordnet ist.

## Claims

1. A water heater - in particular a boiler - comprising a device for physical water treatment of drinking water for reducing the formation of limescale, wherein the device has at least one water inlet and at least one water outlet, **characterised in that** the device is arranged in the cold water feed (3) of the water heater (1) and is in good heat-conducting thermal relationship with the hot water region (13) of the water heater (1) and in addition has a modified weakly acid ion exchanger material for catalytic lime precipitation - preferably in Ca-form and/or in granule form - as at least one water-treating substance (9a).

2. A water heater according to claim 1 **characterised in that** exclusively water from the cold water feed (3) of the water heater (1) flows into the device.

3. A water heater according to one of claims 1 and 2 **characterised in that** the device is arranged in the interior of the water heater (1).

4. A water heater according to one of claims 1 to 3 **characterised in that** the device is arranged at the outside wall of the water heater (1) - preferably within the thermal insulation of the water heater (1).

5. A water heater according to one of claims 1 to 4 **characterised in that** the hot water region (13) of the water heater (1) with which the device is in good heat-conducting thermal relationship has a minimum temperature of 55°C.

6. A water heater according to one of claims 1 to 5 **characterised in that** the water outlet (3c) of the device has a conduit which extends into the lower region of the water heater (1) - preferably into the immediate proximity of the heating means (2) of the water heater (1).

7. A water heater according to one of claims 1 to 6 **characterised in that** the water outlet (3c) of the device is arranged in the lower region of the water heater (1) - preferably in the immediate proximity of the heating means (2) of the water heater.

8. A water heater according to one of claims 1 to 7 **characterised in that** the device delivers crystallisation seeds into the water flowing therethrough.

9. A water heater according to one of claims 1 to 8 **characterised in that** the water-treating substance (9a) is back-flushable.

10. A water heater according to one of claims 1 to 9 **characterised in that** the device has at least one bypass, the bypass permitting back-flushing - preferably of the water-treating substance - of the device.

11. A water heater according to one of claims 1 to 10 **characterised in that** the device has at least one cartridge with a sieve bottom (9b) and discharge nozzles (d), the water-treating substance being arranged in the cartridge (9e).

12. A water heater according to one of claims 1 to 11 **characterised in that** the device has at least one inner cartridge (9e) - preferably with a sieve bottom (9b) and/or a discharge nozzle (9d) - , wherein the water-treating substance (9a, 9c) is arranged in the inner cartridge and the device has a cartridge receiving means (9) arranged in the cold water feed (3) of the water heater (1), wherein the inner cartridge (9e) can be introduced - preferably interchangeably - into the cartridge receiving means (9).

13. A water heater according to one of claims 1 to 12 **characterised in that** the device is arranged in the upper half - preferably in the upper third - of the water heater (1).

## Revendications

1. Distributeur d'eau chaude - en particulier chauffe-eau - comprenant un dispositif pour le traitement physique de l'eau potable pour la réduction de la formation de calcaire, le dispositif présentant au moins une entrée d'eau et au moins une sortie d'eau, **caractérisé en ce que** le dispositif est placé dans l'arrivée d'eau froide (3) du distributeur d'eau chaude (1), et est dans une liaison thermique bonne conductrice de chaleur avec la zone d'eau chaude (13) du distributeur d'eau chaude (1) et présente d'autre part un matériau échangeur d'ions modifié et faiblement acide pour la précipitation du calcaire par catalyse - de préférence sous la forme de Ca et/ou la forme de granulé - de même qu'au moins un produit traitant l'eau (9a).

2. Distributeur d'eau chaude selon la revendication 1, **caractérisé en ce que** seule de l'eau provenant de l'arrivée d'eau froide (3) du distributeur d'eau chaude (1) entre dans le dispositif.

3. Distributeur d'eau chaude selon l'une quelconque des revendications 1 ou 2, **caractérisé en ce que** le dispositif est disposé à l'intérieur du distributeur d'eau chaude (1).

4. Distributeur d'eau chaude selon l'une quelconque des revendications 1 à 3, **caractérisé en ce que** le dispositif est disposé sur la paroi extérieure du distributeur d'eau chaude (1) - de préférence à l'intérieur de la thermo-isolation du distributeur d'eau chaude (1).

5. Distributeur d'eau chaude selon l'une quelconque des revendications 1 à 4, **caractérisé en ce que** la zone d'eau chaude (13) du distributeur d'eau chaude (1), avec laquelle le dispositif est dans une liaison thermique bonne conductrice de chaleur, présente une température minimale de 55°C.

6. Distributeur d'eau chaude selon l'une quelconque des revendications 1 à 5, **caractérisé en ce que** la sortie d'eau (3c) du dispositif présente une conduite qui va dans la zone inférieure du distributeur d'eau chaude (1) - de préférence à proximité immédiate du chauffage (2) du distributeur d'eau chaude (1).

7. Distributeur d'eau chaude selon l'une quelconque des revendications 1 à 6, **caractérisé en ce que** la sortie d'eau (3c) du dispositif est disposée dans la zone inférieure du distributeur d'eau chaude (1) - de préférence à proximité immédiate du chauffage (2) du distributeur d'eau chaude.

8. Distributeur d'eau chaude selon l'une quelconque des revendications 1 à 7, **caractérisé en ce que** le dispositif envoie des germes de cristallisation dans l'eau qui le traverse.

9. Distributeur d'eau chaude selon l'une quelconque des revendications 1 à 8, **caractérisé en ce que** le produit (9a) qui traite l'eau peut être lavé à contre-courant.

10. Distributeur d'eau chaude selon l'une quelconque des revendications 1 à 9, **caractérisé en ce que** le dispositif présente au moins une dérivation, la dérivation permettant un lavage à contre-courant - de préférence du produit traitant l'eau - du dispositif.

11. Distributeur d'eau chaude selon l'une quelconque des revendications 1 à 10, **caractérisé en ce que** le dispositif présente au moins une cartouche avec fond à tamis (9b) et buses d'écoulement (9d), le produit traitant l'eau étant disposé dans la cartouche (9e).

12. Distributeur d'eau chaude selon l'une quelconque des revendications 1 à 11, **caractérisé en ce que** le dispositif présente au moins une cartouche intérieure (9e) - de préférence avec fond à tamis (9b) et/ou buse d'écoulement (9d) -, le produit traitant l'eau (9a, 9c) étant disposé dans la cartouche intérieure et le dispositif présentant un logement de cartouche (9), qui est disposé dans l'arrivée d'eau froide (3) du distributeur d'eau chaude (1), la cartouche intérieure (9e) - de préférence interchangeable - étant introduite dans le logement de cartouche (9).

13. Distributeur d'eau chaude selon l'une quelconque des revendications 1 à 12, **caractérisé en ce que** le dispositif est disposé dans la moitié supérieure - de préférence dans le tiers supérieur - du distributeur d'eau chaude 1.
